# EUROPEAN PATENT APPLICATION

(11) **EP 4 624 416 A1**
(43) Date of publication of application: **01.10.2025**
(21) Application number: 24850447.4
(22) Date of filing: 24.01.2024
(51) Int. Cl.: C01B 25/45, H01M 4/58, H01M 4/62, H01M 10/0525, C01B 32/05

(54) **POSITIVE ELECTRODE MATERIAL AND PREPARATION METHOD THEREFOR, AND LITHIUM-ION BATTERY**

(30) Priority: 04.08.2023 CN 202310986752
(71) Applicant: Hefei Gotion High-Tech Power Energy Co., Ltd., Hefei, Anhui 230012 (CN)
(72) Inventor: CHEN, Xia, Hefei, Anhui 230012 (CN); LIU, Xingliang, Hefei, Anhui 230012 (CN); WANG, Weiwei, Hefei, Anhui 230012 (CN); YANG, Maoping, Hefei, Anhui 230012 (CN)
(74) Representative: Rapisardi, Mariacristina
(86) International application number: PCT/CN2024/073917
(87) International publication number: WO 2025/030787

(57) **Abstract**

Provided are a positive electrode material and a preparation method thereof, and a lithium ion battery. The preparation method includes: performing first mixing on a first lithium source, a metal phthalocyanine complex, a first manganese source, and a first phosphorus source to obtain a first mixed system containing a seed crystal; performing second mixing on the first mixed system, a second lithium source, an iron source, a second manganese source, and a second phosphorus source to obtain a second mixed system containing a precursor; and sintering the second mixed system in a protective atmosphere to obtain a positive electrode material, where a molar ratio of the first lithium source, the first manganese source, and the first phosphorus source is a₁:x₁:1, a₁ is 1.01 to 1.03, and x₁ is 0.5 to 0.8; and a molar ratio of the second lithium source, the iron source, the second manganese source, and the second phosphorus source is a₂:(1-x₂):x₂:1, a₂ is 1.03 to 1.10, and _{X2} is 0.5 to 0.8. The positive electrode material has excellent compaction density and structural stability.

## Description

This application is based upon and claims priority to Chinese Patent Application No. 202310986752.9 filed on August 4, 2023, the disclosure of which is hereby incorporated by reference in its entirety.

### Technical Field

The present disclosure relates to the technical field of battery preparation, specifically to a positive electrode material and a preparation method thereof, and a lithium ion battery.

### Background

Positive electrode materials of lithium ion batteries directly affect multiple key performance such as safety, energy density, processability, etc. At present, common positive electrode materials include lithium iron phosphate, lithium cobalt oxide, lithium manganese oxide, lithium nickel cobalt manganese oxide, etc. Because of the advantages of good safety, a low cost, a stable structure, long cycle life, etc., the lithium iron phosphate (LiFePO₄) becomes the most promising positive electrode material in the industry, and is expected to be applied in a plurality of fields such as energy storage, electric vehicle industry, etc. However, as requirements for lithium battery positive electrode materials with high energy density and high safety performance are proposed, the lithium iron phosphate materials have been unable to meet higher-end demands of the market.

Relying on high voltage and high safety performance, lithium iron manganese phosphate positive electrode materials have gained huge popularity in the lithium battery industry, and have energy density 10% to 20% higher than that of the lithium iron phosphate under the same conditions. However, the ensuing problem is that, compared to iron lithium materials, the lithium iron manganese phosphate positive electrode materials are worse in conductivity and lower compaction density, and a series of problems, such as manganese leaching during a cycling process leading to deterioration of cycling performance, have become bottlenecks for its further scale-up application.

Therefore, it is urgent to develop a high-capacity and high compaction performance lithium iron manganese phosphate material to meet a requirement for high energy density lithium battery positive electrode materials.

### Summary

The present disclosure is mainly intended to provide a positive electrode material and a preparation method thereof, and a lithium ion battery, so as to solve the problems of poor electrochemical performance and cycling stability of a lithium ion battery due to low compaction density and poor structural stability of a lithium iron manganese phosphate positive electrode material in the related art.

In order to implement the above objectives, an aspect of the present disclosure provides a method for preparing a positive electrode material. The method for preparing a positive electrode material includes: first mixing is performed on a first lithium source, a metal phthalocyanine complex, a first manganese source, and a first phosphorus source to obtain a first mixed system containing a seed crystal; second mixing is performed on the first mixed system, a second lithium source, an iron source, a second manganese source, and a second phosphorus source to obtain a second mixed system containing a precursor; and the second mixed system is sintered in a protective atmosphere to obtain a positive electrode material. A molar ratio of lithium in the first lithium source, manganese in the first manganese source, and phosphorus in the first phosphorus source is a₁:x₁:1, where a₁ is 1.01 to 1.03, and x₁ is 0.5 to 0.8; and a molar ratio of lithium in the second lithium source, iron in the iron source, manganese in the second manganese source, and phosphorus in the second phosphorus source is a₂:(1-x₂):x₂:1, where a₂ is 1.03 to 1.10, and x₂ is 0.5 to 0.8.

Further, in the first mixing process, based on a total weight of the first lithium source, the first manganese source, and the first phosphorus source, a weight percentage content of the metal phthalocyanine complex is 0.08 to 0.12wt%.

Further, a first carbon source is also added in the first mixing process. Preferably, based on a total weight of the first lithium source, the metal phthalocyanine complex, the first manganese source, and the first phosphorus source, a weight percentage content of the first carbon source is 0.5 to 1.5wt%. More preferably, the first carbon source is Ketjen black; and further preferably, an average particle size of the first carbon source is 0.05 to 0.80µm.

Further, the first mixing process includes the following steps: the first lithium source, the metal phthalocyanine complex, the first manganese source, and the first phosphorus source are mixed for 10 to 20min at a rotary speed of 80 to 150rpm, and then the first carbon source is added to continuously mix for 15 to 30min at a rotary speed of 250 to 340rpm, so as to obtain the first mixed system.

Further, a second carbon source and urea are also added in the second mixing process. Preferably, based on a total weight of the second lithium source, the iron source, the second manganese source, and the second phosphorus source, a weight percentage content of the second carbon source is 6 to 7.8wt%, and a weight percentage content of the urea is 0.7 to 1%. More preferably, the second carbon source is selected from one or more of a group consisting of starch, sponge carbon, and graphdiyne.

Further, the second mixing process includes the following steps: the first mixed system, the second lithium source, the iron source, the second manganese source, the second phosphorus source, the second carbon source, and the urea are mixed for 15 to 30min at a rotary speed of 80 to 100rpm, and then mixing is continuously performed for 30 to 45min at a rotary speed of 200 to 350rpm, so as to obtain the second mixed system.

Further, based on a total weight of the second lithium source, the iron source, the second manganese source, and the second phosphorus source, a weight percentage content of the seed crystal in the first mixed system is 8 to 15wt%.

Further, the sintering is a staged heat treatment, and comprises first calcination and second calcination. Preferably, a temperature for the first calcination is 300 to 400°C, a time is 2 to 3.5h, a heating rate is 5 to 15°C /min. Preferably, a temperature for the second calcination is 600 to 800°C, a time is 3 to 5h, a heating rate is 3 to 10°C /min. Preferably, the protective atmosphere is a nitrogen atmosphere or an argon atmosphere.

Further, the metal phthalocyanine complex is selected from iron phthalocyanine and a derivative thereof. Preferably, the first lithium source and the second lithium source are each independently selected from one or more of a group consisting of lithium carbonate, lithium dihydrogen phosphate, dilithium hydrogen phosphate, and lithium hydroxide. Preferably, the iron source is selected from one or more of a group consisting of ferric oxide, ferric phosphate, and ferrous oxalate. Preferably, the first manganese source is manganese oxalate. Preferably, the second manganese source is selected from one or more of a group consisting of manganese carbonate, manganese phosphate, manganese sesquioxide, and manganese tetroxide. Preferably, the first phosphorus source and the second phosphorus source are each independently selected from one or more of a group consisting of lithium dihydrogen phosphate, ammonium dihydrogen phosphate, ferric phosphate, and manganese phosphate.

Another aspect of the present disclosure provides a positive electrode material. The positive electrode material is prepared by the above method for preparing a positive electrode material provided in the present disclosure; or the positive electrode material includes a core and a carbon coating layer coating a surface of the core. The positive electrode material has a general formula: *LiₐMnₓFe₁₋ₓPO₄@C,* where a is 1.05 to 1.21, and x is 0.5 to 0.8.

Further, based on a weight percentage content of the positive electrode material, a coating amount of the carbon coating layer is 1.1 to 2.5wt%.

In order to implement the above objectives, another aspect of the present disclosure further provides a lithium ion battery, including a positive electrode, a negative electrode, an electrolyte, and a separator film located between the positive electrode and the negative electrode. The positive electrode includes a positive electrode material prepared by the above method for preparing a positive electrode material, or the positive electrode material provided in the present disclosure.

By using the technical solutions of the present disclosure, in the first mixing process, the first lithium source, the metal phthalocyanine complex, the first manganese source, and the first phosphorus source can form the first mixed system containing the seed crystal; by performing second mixing on the first mixed system, the second lithium source, the iron source, the second manganese source, and the second phosphorus source, the subsequent growth of the seed crystal is facilitated, and the second mixed system containing the precursor is obtained; in the process of sintering the second mixed system, as the sintering proceeds, and the precursor first forms a compact crystal nucleus, which gradually grows into a compact positive electrode material; and the metal phthalocyanine complex and the first manganese source contained in the precursor are subjected to pyrolysis to form a micro-domain airflow cluster, so as to promote nanoization and spheroidization of the material, thereby improving a lithium ion migration rate of the positive electrode material and a compaction rate of the material.

Compared to other ranges, the positive electrode material with the general formula of *LiₐMnₓFe₁₋ₓPO₄* can be obtained by using the above specific using amounts of the raw materials, where a is 1.05 to 1.21, and x is 0.5 to 0.8. The positive electrode material has excellent compaction density and structural stability, and the electrochemical performance and cycling stability of a lithium ion battery can be improved by using the positive electrode material in the lithium ion battery.

### Brief Description of the Drawings

The drawings, which form a part of the present disclosure, are used to provide a further understanding of the present disclosure. The exemplary embodiments of the present disclosure and the description thereof are used to explain the present disclosure, but do not constitute improper limitations to the present disclosure. In the drawings:

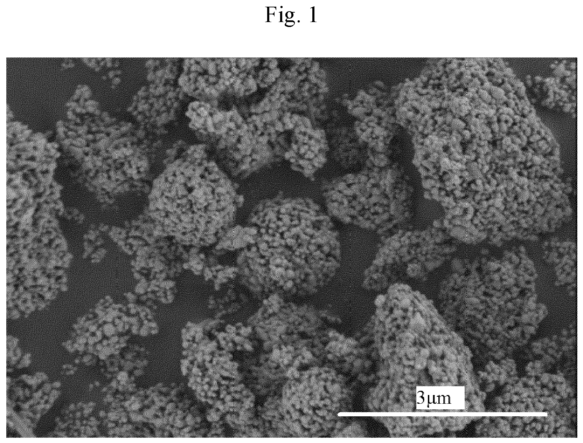

Fig. 1 is a Scanning Electron Microscope (SEM) diagram of a positive electrode material according to Embodiment 1.

### Detailed Description of the Embodiments

It is to be noted that the embodiments in the present disclosure and the features in the embodiments may be combined with one another without conflict. The present disclosure will be described below in detail with reference to the embodiments.

As described in Background, existing lithium iron manganese phosphate positive electrode materials has the problems of poor electrochemical performance and cycling stability of a lithium ion battery due to low compaction density and poor structural stability. In order to solve the above technical problems, the present disclosure provides a method for preparing a positive electrode material. The method for preparing a positive electrode material includes: first mixing is performed on a first lithium source, a metal phthalocyanine complex, a first manganese source, and a first phosphorus source to obtain a first mixed system containing a seed crystal; second mixing is performed on the first mixed system, a second lithium source, an iron source, a second manganese source, and a second phosphorus source to obtain a second mixed system containing a precursor; and the second mixed system is sintered in a protective atmosphere to obtain a positive electrode material. A molar ratio of lithium in the first lithium source, manganese in the first manganese source, and phosphorus in the first phosphorus source is a₁:x₁:1, where a₁ is 1.01 to 1.03, and x₁ is 0.5 to 0.8; and a molar ratio of lithium in the second lithium source, iron in the iron source, manganese in the second manganese source, and phosphorus in the second phosphorus source is a₂:(1-x₂):x₂:1, where a₂ is 1.03 to 1.10, and x₂ is 0.5 to 0.8.

The metal phthalocyanine complex (as shown in a general formula (I)) is a macrocyclic conjugated planar ligand having a 18-π electronic system, and may be coordinated to a variety of metal elements, and various substituent groups R may also be introduced on an aryl ring, thereby changing the nature of the substituents on the metal and the aryl ring.

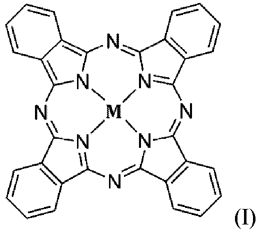

In the first mixing process, the first lithium source, the metal phthalocyanine complex, the first manganese source, and the first phosphorus source can form the first mixed system containing the seed crystal; by performing second mixing on the first mixed system, the second lithium source, the iron source, the second manganese source, and the second phosphorus source, the subsequent growth of the seed crystal is facilitated, and the second mixed system containing the precursor is obtained; in the process of sintering the second mixed system, as the sintering proceeds, and the precursor first forms a compact crystal nucleus, which gradually grows into a compact positive electrode material; and the metal phthalocyanine complex and the first manganese source contained in the precursor are subjected to pyrolysis to form a micro-domain airflow cluster, so as to promote nanoization and spheroidization of the material, thereby improving a lithium ion migration rate of the positive electrode material and a compaction rate of the material.

Compared to other ranges, the positive electrode material with the general formula of *LiₐMnₓFe₁₋ₓPO₄* can be obtained by using the above specific using amounts of the raw materials, where a is 1.05 to 1.21, and x is 0.5 to 0.8. The positive electrode material has excellent compaction density and structural stability, and the electrochemical performance and cycling stability of a lithium ion battery can be improved by using the positive electrode material in the lithium ion battery.

In a preferred implementation, in the first mixing process, based on a total weight of the first lithium source, the first manganese source, and the first phosphorus source, a weight percentage content of the metal phthalocyanine complex is 0.08 to 0.12wt%. The weight percentage content of the metal phthalocyanine complex includes, but is not limited to, the above range. By limiting the weight percentage content within the above range, nanoization and spheroidization of the material is further promoted, thereby improving the lithium ion migration rate of the positive electrode material and the compaction rate of the material.

In a preferred implementation, a first carbon source is also added in the first mixing process. A carbon coating layer coating a surface of a core can be subsequently formed through the introduction of the first carbon source, facilitating the structural stability of the positive electrode material. Furthermore, because of the excellent conductivity of the carbon coating layer, the conductivity of the positive electrode material is improved, thereby improving the electrochemical performance of the lithium ion battery such as charge-discharge performance, etc.

In order to further improve the structural stability of the positive electrode material, and further improve the conductivity of the positive electrode material, preferably, based on a total weight of the first lithium source, the metal phthalocyanine complex, the first manganese source, and the first phosphorus source, a weight percentage content of the first carbon source is 0.5 to 1.5wt%.

In order to further improve the structural stability of the positive electrode material, and further improve the conductivity of the positive electrode material, more preferably, the first carbon source is Ketjen black; and further preferably, an average particle size of the first carbon source is 0.05 to 0.8µm.

In a preferred implementation, the first mixing process includes the following steps: the first lithium source, the metal phthalocyanine complex, the first manganese source, and the first phosphorus source are mixed for 10 to 20min at a rotary speed of 80 to 150rpm, and then the first carbon source is added to continuously mix for 15 to 30min at a rotary speed of 250 to 340rpm, so as to obtain the first mixed system.

Compared to direct one-step mixing of the first lithium source, the metal phthalocyanine complex, the first manganese source, the first phosphorus source, and the first carbon source, by using the above process of batch mixing, the first carbon source is more uniformly coated on a surface of the above seed crystal to inhibit an impact on an internal structure of the seed crystal, thereby facilitating the spheroidization and nanoization of the positive electrode material. Compared to other mixing conditions, by limiting the rotary speed and time of the process of mixing the first lithium source, the metal phthalocyanine complex, the first manganese source, and the first phosphorus source within the above range, a generation rate of the seed crystal is increased; and then by continuously mixing the first carbon source under the above rotary speed and time conditions, the first carbon source is more uniformly coated on the surface of the seed crystal, so as to obtain the first mixed system.

In a preferred implementation, a second carbon source and urea are also added in the second mixing process. Through the introduction of the second carbon source, on one hand, the carbon coating layer coating the surface of the core can be formed later, and on the other hand, a micro nano structure is constructed, such that the overall conductivity of the material is improved. The introduction of the urea is the key in assisting the formation of a micro-domain airflow cluster in the later stage of calcination, facilitating the shuttling of a sintering gas among primary particles, and increasing the nanoization and spheroidization of the material, thereby improving the overall performance of the positive electrode material.

In order to further improve the structural stability of the positive electrode material, and further improve the conductivity of the positive electrode material, preferably, based on a total weight of the second lithium source, the iron source, the second manganese source, and the second phosphorus source, a weight percentage content of the second carbon source is 6 to 7.8wt%, and a weight percentage content of the urea is 0.7 to 1%.

In order to further improve the structural stability of the positive electrode material, and further improve the conductivity of the positive electrode material, more preferably, the second carbon source includes, but is not limited to, one or more of a group consisting of starch, sponge carbon, and graphdiyne.

In a preferred implementation, the second mixing process includes the following steps: the first mixed system, the second lithium source, the iron source, the second manganese source, the second phosphorus source, the second carbon source, and the urea are mixed for 15 to 30min at a rotary speed of 80 to 100rpm, and then mixing is continuously performed for 30 to 45min at a rotary speed of 200 to 350rpm, so as to obtain the second mixed system. Compared to direct mixing of the first mixed system, the second lithium source, the iron source, the second manganese source, the second phosphorus source, the second carbon source, and the urea under the same rotary speed condition, stirring is performed at a low speed first and then at an increased rotary speed, such that a more compact precursor is obtained, thereby improving the compaction density of the subsequently prepared positive electrode material.

In a preferred implementation, based on a total weight of the second lithium source, the iron source, the second manganese source, and the second phosphorus source, a weight percentage content of the seed crystal in the first mixed system is 8 to 15wt%. The weight percentage content of the seed crystal includes, but is not limited to, the above range. By limiting the weight percentage content within the above range, more effective crystal nucleuses are formed, such that the compactness of the precursor is improved, thereby improving the compaction density of the subsequently prepared positive electrode material.

In a preferred implementation, the sintering is a staged heat treatment, and includes first calcination and second calcination. Compared to one-time sintering, the structural stability of the positive electrode material is improved by using the staged heat treatment, and at the same time, the purity of a crystal form is improved, thereby improving the cycling stability of the lithium ion battery.

In a preferred implementation, a temperature for the first calcination is 300 to 400°C, a time is 2 to 3.5h, a heating rate is 5 to 15°C/min. The temperature, time, and heating rate for the first calcination include, but are not limited to, the above ranges. By limiting the temperature, time, and heating rate within the above ranges, the structural stability and crystal form purity of the positive electrode material are further improved, thereby further improving the cycling stability of the lithium ion battery.

In a preferred implementation, a temperature for the second calcination is 600 to 800°C, a time is 3 to 5h, a heating rate is 3 to 10°C/min. The temperature, time, and heating rate for the second calcination include, but are not limited to, the above ranges. By limiting the temperature, time, and heating rate within the above ranges, the structural stability and crystal form purity of the positive electrode material are further improved, thereby further improving the cycling stability of the lithium ion battery.

In order to reduce introduction of impurity components during sintering to inhibit an impact of the impurity components on the electrochemical performance of the positive electrode material, preferably, the protective atmosphere is a nitrogen atmosphere or an argon atmosphere.

In a preferred implementation, the metal phthalocyanine complex includes, but is not limited to, iron phthalocyanine and a derivative thereof. It is to be noted that, the term iron phthalocyanine in the present disclosure refers to ferrous phthalocyanine, with a molecular formula being *C₃₂H₁₆FeN₈.* The iron phthalocyanine derivative in the present disclosure refers to iron phthalocyanine containing the substituent group R, and the substituent group R may be carboxyl, nitro, amino, or the like. Compared with other types, by using the iron phthalocyanine and the derivative thereof, in an aspect, pyrolysis is facilitated during subsequent sintering, and gaps in a crystal structure of the positive electrode material are formed after pyrolysis. Furthermore, since central ions thereof are iron ions, partial iron source is supplement and participated in the formation of the positive electrode material, so as to inhibit the introduction of impurity metal elements. The effect of the above two aspects commonly facilitates improvement of the structural stability and compaction density of the positive electrode material, thereby improving the electrochemical performance and cycling performance of the lithium ion battery.

The first lithium source and the second lithium source used in the present disclosure may be commonly-used types in the art. In a preferred implementation, the first lithium source and the second lithium source each independently include, but are not limited to, one or more of a group consisting of lithium carbonate, lithium dihydrogen phosphate, dilithium hydrogen phosphate, and lithium hydroxide.

The iron source used in the present disclosure may be a commonly-used type in the art. In a preferred implementation, the iron source includes, but is not limited to, one or more of a group consisting of ferric oxide, ferric phosphate, and ferrous oxalate.

In a preferred implementation, the first manganese source is manganese oxalate. Compared to other types, by using the manganese oxalate as the first manganese source, decomposition is facilitated during subsequent sintering, and a micro-domain airflow cluster is formed with reaction hot air. Primary particles of the material grow in clusters locally in a micro-domain under the action of the hot air, and quantitative micro-domain airflow clusters facilitate the regulation of the sizes and shapes of the particles of the material, such that nanoization and primary particle spheroidization of the positive electrode material are facilitated, thereby improving overall performance.

The second manganese source used in the present disclosure may be a commonly-used type in the art. In a preferred implementation, the second manganese source includes, but is not limited to, one or more of a group consisting of manganese carbonate, manganese phosphate, manganese sesquioxide, and manganese tetroxide.

The first phosphorus source and the second phosphorus source used in the present disclosure may be commonly-used types in the art. In a preferred implementation, the first phosphorus source and the second phosphorus source each independently include, but are not limited to, one or more of a group consisting of lithium dihydrogen phosphate, ammonium dihydrogen phosphate, ferric phosphate, and manganese phosphate.

A second aspect of the present disclosure further provides a positive electrode material. The positive electrode material is prepared by the above method for preparing a positive electrode material provided in the present disclosure; or the positive electrode material includes a core and a carbon coating layer coating a surface of the core. The positive electrode material has a general formula: *LiₐMnₓFe₁₋ₓPO₄@C,* where a is 1.05 to 1.21, and x is 0.5 to 0.8. The positive electrode material prepared by the above preparation method has excellent compaction density and structural stability, and the electrochemical performance and cycling stability of the lithium ion battery can be improved by using the positive electrode material in the lithium ion battery. The coating of the surface of the core by the carbon coating layer facilitates improvement of the conductivity of the positive electrode material, thereby improving the electrochemical performance of the lithium ion battery such as charge-discharge performance, etc.

In order to improve the conductivity of the positive electrode material to further improve the electrochemical performance of the lithium ion battery such as charge-discharge performance, etc., preferably, based on a weight percentage content of the positive electrode material, a coating amount of the carbon coating layer is 1.1 to 2.5wt%.

A third aspect of the present disclosure further provides a lithium ion battery, including a positive electrode, a negative electrode, an electrolyte, and a separator film located between the positive electrode and the negative electrode. The positive electrode includes a positive electrode material prepared by the above method for preparing a positive electrode material, or the positive electrode material provided in the present disclosure.

The positive electrode material prepared by the above preparation method has excellent compaction density and structural stability, and the electrochemical performance and cycling stability of the lithium ion battery can be improved by using the positive electrode material in the lithium ion battery.

The present disclosure is further described in detail below with reference to specific embodiments, and the embodiments cannot be construed as limiting the scope of protection claimed in the present disclosure.

### Embodiment 1

A method for preparing a positive electrode material included the following operations.
(1) Lithium carbonate, manganese oxalate, and ammonium dihydrogen phosphate were weighed according to an element molar ratio being Li:Mn:P=1.02:0.7:1 and were added in a high-speed mixer; then 0.1wt% iron phthalocyanine (Aladdin, analytical grade) by total weight of the above raw materials was added; mixing was performed for 15min at a low speed of 100rpm first, and then performed for 20min at a high speed of 300rpm; 1 wt% Ketjen black (Aladdin, analytical grade; average particle size being 0.1µm) by total weight of the above raw materials (based on a total weight of the lithium carbonate, the ferrous oxalate, the manganese oxalate, and the ammonium dihydrogen phosphate) was added; and mixing was continuously performed for 20min at a high speed, so as to obtain a first mixed system containing a seed crystal.
(2) The lithium carbonate, ferrous oxalate, the manganese oxalate, and the ammonium dihydrogen phosphate were weighed according to a stoichiometric ratio being Li:Fe:Mn:P=1.07:0.3:0.7:1 and were added to the high-speed mixer; 7wt% sponge carbon, 10wt% first mixed system, and 0.8wt% urea by total weight of the above raw materials (based on a total weight of the lithium carbonate, the ferrous oxalate, the manganese oxalate, and the ammonium dihydrogen phosphate) were added; and mixing was performed for 20min at a low speed of 90rpm and was then performed for 40min at a high speed of 300rpm, so as to obtain a second mixed system containing a precursor.
(3) The above prepared second mixed system was heated to 350°C at a heating rate of 10°C/min in high purity nitrogen and subjected to low-temperature sintering for 3h first, and then was heated to 700°C at a heating rate of 8°C/min and subjected to high-temperature sintering for 4h, so as to obtain a positive electrode material *Li_{1.1}Mn_{0.6}Fe_{0.4}O₄@C.* Based on a weight percentage content of the positive electrode material, a coating amount of a carbon coating layer was 2.0wt%.

As shown in Fig. 1, primary particles of the positive electrode material *Li_{1.1}Mn_{0.6}Fe_{0.4}O₄@C* prepared in Embodiment 1 were high in degree of sphericity, and uniform in distribution, thereby improving electrical performance and compaction performance.

### Embodiment 2

(1) Lithium carbonate, manganese oxalate, and ammonium dihydrogen phosphate were weighed according to an element molar ratio being Li:Mn:P=1.01:0.8:1 and were added in a high-speed mixer; then 0.08wt% iron phthalocyanine (Aladdin, analytical grade) by total weight of the above raw materials was added; mixing was performed for 10min at a low speed of 80rpm first, and then performed for 15min at a high speed of 250rpm; 0.5wt% Ketjen black (Aladdin, analytical grade; average particle size being 0.05µm) by total weight of the above raw materials (based on a total weight of the lithium carbonate, the ferrous oxalate, the manganese oxalate, and the ammonium dihydrogen phosphate) was added; and mixing was continuously performed for 15min at a high speed, so as to obtain a first mixed system containing a seed crystal.
(2) The lithium carbonate, ferrous oxalate, the manganese oxalate, and the ammonium dihydrogen phosphate were weighed according to a stoichiometric ratio being Li:Fe:Mn:P=1.03:0.2:0.8:1 and were added to the high-speed mixer; 6wt% sponge carbon, 8wt% first mixed system, and 0.7wt% urea by total weight of the above raw materials (based on a total weight of the lithium carbonate, the ferrous oxalate, the manganese oxalate, and the ammonium dihydrogen phosphate) were added; and mixing was performed for 15min at a low speed of 80rpm and was then performed for 30min at a high speed of 200rpm, so as to obtain a second mixed system containing a precursor.
(3) The above prepared second mixed system was heated to 300°C at a heating rate of 5°C/min in high purity nitrogen and subjected to low-temperature sintering for 2h first, and then was heated to 600°C at a heating rate of 3°C /min and subjected to high-temperature sintering for 3h, so as to obtain a positive electrode material *Li_{1.05}Mn_{0.5}Fe_{0.5}PO₄@C.* Based on a weight percentage content of the positive electrode material, a coating amount of a carbon coating layer was 1.1wt%.

### Embodiment 3

(1) Lithium carbonate, manganese oxalate, and ammonium dihydrogen phosphate were weighed according to an element molar ratio being Li:Mn:P=1.03:0.5:1 and were added in a high-speed mixer; then 0.12wt% iron phthalocyanine (Aladdin, analytical grade) by total weight of the above raw materials was added; mixing was performed for 20min at a low speed of 150rpm first, and then performed for 30min at a high speed of 340rpm; 1.5wt% Ketjen black (Aladdin, analytical grade; average particle size being 0.8µm) by total weight of the above raw materials (based on a total weight of the lithium carbonate, the ferrous oxalate, the manganese oxalate, and the ammonium dihydrogen phosphate) was added; and mixing was continuously performed for 30min at a high speed, so as to obtain a first mixed system containing a seed crystal.
(2) The lithium carbonate, ferrous oxalate, the manganese oxalate, and the ammonium dihydrogen phosphate were weighed according to a stoichiometric ratio being Li:Fe:Mn:P=1.1:0.5:0.5:1 and were added to the high-speed mixer; 7.8wt% sponge carbon, 15wt% first mixed system, and 1wt% urea by total weight of the above raw materials (based on a total weight of the lithium carbonate, the ferrous oxalate, the manganese oxalate, and the ammonium dihydrogen phosphate) were added; and mixing was performed for 30min at a low speed of 100rpm and was then performed for 45min at a high speed of 350rpm, so as to obtain a second mixed system containing a precursor.
(3) The above prepared second mixed system was heated to 400°C at a heating rate of 15°C/min in high purity nitrogen and subjected to low-temperature sintering for 3.5h first, and then was heated to 800°C at a heating rate of 10°C/min and subjected to high-temperature sintering for 5h, so as to obtain a positive electrode material *Li_{1.21}Mn_{0.8}Fe_{0.2}PO₄@C.* Based on a weight percentage content of the positive electrode material, a coating amount of a carbon coating layer was 2.5wt%.

### Embodiment 4

A difference between this embodiment and Embodiment 1 lied in that, in step (1), 0.5wt% Ketjen black by total weight of the above raw materials (based on a total weight of the lithium carbonate, the iron phthalocyanine, the manganese oxalate, and the ammonium dihydrogen phosphate) was added. Other steps were the same as those in Embodiment 1 Based on a weight percentage content of the positive electrode material, a coating amount of a carbon coating layer was 1.1wt%.

### Embodiment 5

A difference between this embodiment and Embodiment 1 lied in that, in step (1), 1.5wt% Ketjen black by total weight of the above raw materials (based on a total weight of the lithium carbonate, the iron phthalocyanine, the manganese oxalate, and the ammonium dihydrogen phosphate) was added. Other steps were the same as those in Embodiment 1. Based on a weight percentage content of the positive electrode material, a coating amount of a carbon coating layer was 2.5wt%.

### Embodiment 6

A difference between this embodiment and Embodiment 1 lied in that, in step (1), 2.0wt% Ketjen black by total weight of the above raw materials (based on a total weight of the lithium carbonate, the iron phthalocyanine, the manganese oxalate, and the ammonium dihydrogen phosphate) was added. Other steps were the same as those in Embodiment 1. Based on a weight percentage content of the positive electrode material, a coating amount of a carbon coating layer was 0.5wt%.

### Embodiment 7

A difference between this embodiment and Embodiment 1 lied in that, in step (2), a second carbon source added was starch (Aladdin, molecular weight being 50000 to 60000), and based on the total weight of the lithium carbonate, ferrous oxalate, the manganese oxalate, and the ammonium dihydrogen phosphate, a weight percentage content of the starch was 6wt%. Other steps were the same as those in Embodiment 1. Based on a weight percentage content of the positive electrode material, a coating amount of a carbon coating layer was 1.1wt%.

### Embodiment 8

A difference between this embodiment and Embodiment 1 lied in that, in step (2), a second carbon source added was graphdiyne (Aladdin, analytical grade), and based on the total weight of the lithium carbonate, ferrous oxalate, the manganese oxalate, and the ammonium dihydrogen phosphate, a weight percentage content of the graphdiyne was 7.8wt%. Other steps were the same as those in Embodiment 1. Based on a weight percentage content of the positive electrode material, a coating amount of a carbon coating layer was 2.5wt%.

### Embodiment 9

A difference between this embodiment and Embodiment 1 lied in that, in step (2), based on the total weight of the lithium carbonate, ferrous oxalate, the manganese oxalate, and the ammonium dihydrogen phosphate, a weight percentage content of the sponge carbon was 5wt%. Other steps were the same as those in Embodiment 1. Based on a weight percentage content of the positive electrode material, a coating amount of a carbon coating layer was 0.5wt%.

### Comparative example 1

(1) Lithium carbonate, ferrous oxalate, manganese oxalate, and ammonium dihydrogen phosphate were weighed according to an element molar ratio being Li:Fe:Mn:P=1.02:0.3:0.7:1 and were added in a high-speed mixer; then mixing was performed for 15min at a low speed of 100rpm/min first, and then performed for 20min at a high speed of 300rpm/min; 1wt% Ketjen black (Aladdin, analytical grade; average particle size being 0.1µm) by total weight of the above raw materials (based on a total weight of the lithium carbonate, the ferrous oxalate, the manganese oxalate, and the ammonium dihydrogen phosphate) was added; and mixing was continuously performed for 20min at a high speed, so as to obtain a first mixed system containing a seed crystal.
(2) The lithium carbonate, ferrous oxalate, the manganese oxalate, and the ammonium dihydrogen phosphate were weighed according to an element molar ratio being Li:Fe:Mn:P=1.07:0.3:0.7:1 and were added to the high-speed mixer; 7wt% sponge carbon, 10wt% first mixed system, and 0.8wt% urea by total weight of the above raw materials (based on a total weight of the lithium carbonate, the ferrous oxalate, the manganese oxalate, and the ammonium dihydrogen phosphate) were added; and mixing was performed for 20min at a low speed of 90rpm/min and was then performed for 40min at a high speed of 300rpm/min, so as to obtain a second mixed system containing a precursor.
(3) The above prepared second mixed system was subjected to low-temperature sintering for 3h at 350°C in high purity nitrogen first, and then was subjected to high-temperature sintering for 4h at 700°C, so as to obtain a positive electrode material.

### Comparative example 2

Differences between this comparative example and Embodiment 1 lied in that, in step (1), an element molar ratio of the lithium carbonate, the iron phthalocyanine, the manganese oxalate, and the ammonium dihydrogen phosphate was Li:Mn:P=1.01:0.4:1, and a first carbon source was not added; and in step (2), a weight ratio of the lithium carbonate, the ferrous oxalate, the manganese oxalate, and the ammonium dihydrogen phosphate was 1.1:0.6:0.4:1, and a second carbon source and urea were not added. Other steps were the same as those in Embodiment 1.

The above positive electrode materials prepared in all embodiments of the present disclosure and the positive electrode materials prepared in the comparative examples are assembled into lithium ion batteries by using the above methods, and electrochemical performance and cycling stability tests were performed. Test results were shown in Table 1.

An assembly process of the lithium ion battery included: the positive electrode material was separately uniformly mixed with a conductive agent SP and an adhesive PVDF according to a weight ratio of 8:1:1, pulped into a slurry, then uniformly coated on aluminum foil, dried in vacuum, and rolled into a positive electrode plate; a button battery was assembled in a glove box filled with an argon atmosphere, the cut electrode plate was used as a positive electrode, a battery grade lithium sheet was a negative electrode, and an electrolyte was mainly composed of PE as a separator film, lithium hexafluorophosphate as a main component, and a combination of EC+EMC+DEC as a solvent.

**Table 1**

| | First charge specific capacity at 0.2C (mAh/g) | First discharge specific capacity at 0.2C (mAh/g) | Discharge specific capacity at 1C (mAh/g) | Initial coulombic efficiency (%) | Capacity retention rate (%) (200 cycles) | Compaction density (g/cm³) |
|---|---|---|---|---|---|---|
| Embodiment 1 | 158.9 | 155.5 | 145.6 | 98.8 | 98.9 | 2.35 |
| Embodiment 2 | 159.1 | 154.8 | 144.8 | 98.4 | 98.1 | 2.33 |
| Embodiment 3 | 158.2 | 155.1 | 144.3 | 98.5 | 97.0 | 2.32 |
| Embodiment 4 | 158.3 | 154.2 | 144.9 | 98.6 | 97.8 | 2.33 |
| Embodiment 5 | 158.2 | 154.3 | 144.9 | 98.4 | 98.1 | 2.31 |
| Embodiment 6 | 149.6 | 142.1 | 132.2 | 90.8 | 70.0 | 1.90 |
| Embodiment 7 | 159.0 | 155.1 | 144.1 | 97.7 | 98.0 | 2.30 |
| Embodiment 8 | 158.2 | 154.0 | 143.9 | 98.0 | 98.3 | 2.28 |
| Embodiment 9 | 148.9 | 140.9 | 131.0 | 92.1 | 65.9 | 1.97 |
| Comparative example 1 | 149.8 | 140.6 | 130.4 | 91.1 | 68.9 | 1.99 |
| Comparative example 2 | 148.1 | 139.8 | 132.0 | 89.9 | 69.9 | 1.89 |

It may be seen from the above description that, in the above embodiments of the present disclosure, the following technical effects are realized.

By comparing Embodiments 1 to 3 with Comparative example 1, it might be learned that, in the first mixing process, the first lithium source, the metal phthalocyanine complex, the first manganese source, and the first phosphorus source could form the first mixed system containing the seed crystal; by performing second mixing on the first mixed system, the second lithium source, the iron source, the second manganese source, and the second phosphorus source, the subsequent growth of the seed crystal was facilitated, and the second mixed system containing the precursor was obtained; in the process of sintering the second mixed system, as the sintering proceeds, and the precursor first formed a compact crystal nucleus, which gradually grew into a compact positive electrode material; and the metal phthalocyanine complex and the first manganese source contained in the precursor were subjected to pyrolysis to form a micro-domain airflow cluster, so as to promote nanoization and spheroidization of the material, thereby improving a lithium ion migration rate of the positive electrode material and a compaction rate of the material.

By comparing Embodiments 1, 4 to 6, it might be learned that, the weight percentage content of the first carbon source included, but was not limited to, the above range. By limiting the weight percentage content within the above range, the structural stability of the positive electrode material was further improved, and at the same time, the conductivity of the positive electrode material was further improved.

By comparing Embodiments 1, 7 to 9, it might be learned that, the weight percentage content of the second carbon source included, but was not limited to, a preferred range of the present disclosure. By limiting the weight percentage content within the preferred range of the present disclosure, the structural stability of the positive electrode material was further improved, and the conductivity of the positive electrode material was further improved, thereby further improving the electrochemical performance of the lithium ion battery.

It is to be noted that terms "first", "second" and the like in the description and claims of the present disclosure are used for distinguishing similar objects rather than describing a specific sequence or a precedence order. It should be understood that the terms used in such a way may be exchanged where appropriate, in order that the implementations of the present disclosure described here can be implemented in an order other than those described herein.

The above are only the preferred embodiments of the present disclosure and are not intended to limit the present disclosure. For those skilled in the art, the present disclosure may have various modifications and variations. Any modifications, equivalent replacements, improvements and the like made within the spirit and principle of the present disclosure all fall within the scope of protection of the present disclosure.

## Claims

1. A method for preparing a positive electrode material, wherein the method for preparing a positive electrode material comprising:
performing first mixing on a first lithium source, a metal phthalocyanine complex, a first manganese source, and a first phosphorus source to obtain a first mixed system containing a seed crystal;
performing second mixing on the first mixed system, a second lithium source, an iron source, a second manganese source, and a second phosphorus source to obtain a second mixed system containing a precursor; and
sintering the second mixed system in a protective atmosphere to obtain a positive electrode material, wherein
a molar ratio of lithium in the first lithium source, manganese in the first manganese source, and phosphorus in the first phosphorus source is a₁:x₁:1, wherein a₁ is 1.01 to 1.03, and x₁ is 0.5 to 0.8; and a molar ratio of lithium in the second lithium source, iron in the iron source, manganese in the second manganese source, and phosphorus in the second phosphorus source is a₂:(1-x₂):x₂:1, wherein a₂ is 1.03 to 1.10, and x₂ is 0.5 to 0.8.

2. The method for preparing a positive electrode material according to claim 1, wherein in the first mixing process, based on a total weight of the first lithium source, the first manganese source, and the first phosphorus source, a weight percentage content of the metal phthalocyanine complex is 0.08 to 0.12wt%.

3. The method for preparing a positive electrode material according to claim 1, wherein a first carbon source is also added in the first mixing process; and
based on a total weight of the first lithium source, the metal phthalocyanine complex, the first manganese source, and the first phosphorus source, a weight percentage content of the first carbon source is 0.5 to 1.5wt%.

4. The method for preparing a positive electrode material according to claim 3, wherein the first carbon source is Ketjen black; and an average particle size of the first carbon source is 0.05 to 0.80µm.

5. The method for preparing a positive electrode material according to claim 3, wherein the first mixing process comprising the following steps:
mixing the first lithium source, the metal phthalocyanine complex, the first manganese source, and the first phosphorus source for 10 to 20min at a rotary speed of 80 to 150rpm, and then adding the first carbon source to continuously mix for 15 to 30min at a rotary speed of 250 to 340rpm, so as to obtain the first mixed system.

6. The method for preparing a positive electrode material according to any one of claims 1 to 5, wherein a second carbon source and urea are also added in the second mixing process; and
based on a total weight of the second lithium source, the iron source, the second manganese source, and the second phosphorus source, a weight percentage content of the second carbon source is 6 to 7.8wt%, and a weight percentage content of the urea is 0.7 to 1%.

7. The method for preparing a positive electrode material according to claim 6, wherein the second carbon source is selected from one or more of a group consisting of starch, sponge carbon, and graphdiyne.

8. The method for preparing a positive electrode material according to claim 7, wherein the second mixing process comprising the following steps:
mixing the first mixed system, the second lithium source, the iron source, the second manganese source, the second phosphorus source, the second carbon source, and the urea for 15 to 30min at a rotary speed of 80 to 100rpm, and then continuously performing mixing for 30 to 45min at a rotary speed of 200 to 350rpm, so as to obtain the second mixed system.

9. The method for preparing a positive electrode material according to claim 8, wherein based on a total weight of the second lithium source, the iron source, the second manganese source, and the second phosphorus source, a weight percentage content of the seed crystal in the first mixed system is 8 to 15wt%.

10. The method for preparing a positive electrode material according to any one of claims 1 to 5, wherein the sintering is a staged heat treatment, and comprising a first calcination and a second calcination, wherein
a temperature for the first calcination is 300 to 400°C, a time is 2 to 3.5h, a heating rate is 5 to 15°C/min; and/or
a temperature for the second calcination is 600 to 800°C, a time is 3 to 5h, a heating rate is 3 to 10°C /min; and/or
the protective atmosphere is a nitrogen atmosphere or an argon atmosphere.

11. The method for preparing a positive electrode material according to any one of claims 1 to 5, wherein
the metal phthalocyanine complex is selected from iron phthalocyanine and a derivative thereof; and/or
the first lithium source and the second lithium source are each independently selected from one or more of a group consisting of lithium carbonate, lithium dihydrogen phosphate, dilithium hydrogen phosphate, and lithium hydroxide; and/or
the iron source is selected from one or more of a group consisting of ferric oxide, ferric phosphate, and ferrous oxalate; and/or
the first manganese source is manganese oxalate; and/or
the second manganese source is selected from one or more of a group consisting of manganese carbonate, manganese phosphate, manganese sesquioxide, and manganese tetroxide; and/or
the first phosphorus source and the second phosphorus source are each independently selected from one or more of a group consisting of lithium dihydrogen phosphate, ammonium dihydrogen phosphate, ferric phosphate, and manganese phosphate.

12. A positive electrode material, prepared by the method for preparing a positive electrode material according to claim 1, or comprising a core and a carbon coating layer coating a surface of the core, wherein the positive electrode material has a general formula: *LiₐMnₓFe₁₋ₓPO₄@C,* wherein a is 1.05 to 1.21, and x is 0.5 to 0.8.

13. The positive electrode material according to claim 12, wherein based on a weight percentage content of the positive electrode material, a coating amount of the carbon coating layer is 1.1 to 2.5wt%.

14. A lithium ion battery, comprising a positive electrode, a negative electrode, an electrolyte, and a separator film located between the positive electrode and the negative electrode, wherein the positive electrode comprising the positive electrode material according to claim 12 or 13.
